# FASCICULE DE BREVET EUROPEEN

(11) **EP 1 380 800 B1**
(45) Date de publication et mention de la délivrance du brevet: **14.11.2007**
(21) Numéro de dépôt: 03356097.0
(22) Date de dépôt: 30.06.2003
(51) Int. Cl.: F25B 30/06, F25B 30/02, F25B 29/00

(54) **Pompe à chaleur**
Wärmepumpe
Heatpump

(30) Priorité: 12.07.2002 FR 0208998
(43) Date de publication de la demande: 14.01.2004
(73) Titulaire: Avenir Energie, 26000 Valence (FR)
(72) Inventeur: Barrault, Jean-Luc, 26320 Saint Marcel les Valence (FR)
(74) Mandataire: Thivillier, Patrick

(56) Documents cités:
- EP-A- 0 009 786
- WO-A-91/05977
- DE-A- 19 820 818
- FR-A- 2 802 623
- US-A- 4 449 572
- US-A- 4 570 452
- US-A- 5 339 890
- US-A- 5 758 514

## Description

L'invention se rattache au secteur technique des pompes à chaleur notamment du type de celles prélevant l'énergie dans le sol, et restituant les calories dans un circuit de chauffage à eau chaude notamment.

Plus particulièrement, l'invention se rattache au secteur technique de la géothermie.

D'une manière connue, une installation de pompe à chaleur destinée, par exemple, au chauffage d'une habitation est constituée d'un générateur situé dans un local quelconque, et assujettie à des moyens de captage de l'énergie provenant du noyau de la terre. Parmi les différents moyens de captage de l'énergie, la géothermie utilise très souvent des capteurs sous forme d'une nappe de cuivre par exemple, et enterrés a une profondeur de 50 à 60 cm environ. Il est également possible d'utiliser une sonde géothermique verticale ou de procéder à un pompage de l'eau dans la nappe phréatique.

Quels que soient les types de capteurs utilisés, une liaison frigorifique assure le transfert d'énergie entre le capteur et le générateur.

On a proposé par exemple des appareils monobloc assemblés en usine. Le capteur destiné à être enterré, se présente sous forme d'au moins une couronne solidaire d'un ensemble compresseur et condenseur équipant le générateur. Ces appareils sont destinés à être enterrés partiellement ou totalement à proximité des capteurs.

L'invention vise plus particulièrement une pompe à chaleur du type de celle décrite dans le brevet FR 2716958 et dans le modèle d'utilité allemand G 93 16 592.7.

Le brevet FR2716958 vise plus particulièrement une pompe à chaleur présentant une enveloppe destinée à être enterrée et à l'intérieur de laquelle sont montés les principaux éléments : condenseur, compresseur, détendeur, distributeur, collecteur........ Le capteur est constitué de plusieurs épingles pénétrant par le bas de l'enveloppe pour remonter dans la partie haute de cette dernière, en vue d'être raccordé à l'ensemble thermodynamique. Plus particulièrement les épingles pénètrent en partie basse, de l'enveloppe à partir de l'un de ses côtés. On conçoit que lorsque l'enveloppe est enterrée, l'étanchéité est difficile à réaliser. Il en est de même en ce qui concerne l'entretien et le service après vente.

On ne peut, par ailleurs, exclure des risques d'infiltration d'eau en cas de fortes pluies et de la configuration spécifique du terrain. Dans l'hypothèse où ce type de pompe à chaleur est posée sur le sol, le raccordement des éléments de capteur avec les éléments thermodynamiques sont apparents et il existe des risques importants de détériorations des tubes et leur isolant. Il est par ailleurs difficile de masquer les différents éléments de tuyauterie.

Les mêmes inconvénients se retrouvent dans la solution relevant de l'enseignement du modèle d'utilité allemand précité G 93 16 592.7 qui concerne une pompe à chaleur semi enterrée. Le raccordement des éléments de capteurs enterrés, s'effectue en partie basse de l'enceinte, et à partir de l'un de ses côtés. Par conséquent, les mêmes inconvénients : risques de fuite, détériorations des éléments de capteurs au niveau du raccordement, se retrouvent dans cette solution.

Le document US-A-4 449 572 décrit également une pompe à chaleur telle que revendiquée dans le préambule de la revendication 1.

L'invention s'est fixée pour but de remédier à ces inconvénients de manière simple, sure, efficace et rationnelle.

Le problème que se propose de résoudre l'invention est de proposer une pompe à chaleur hors sol, dont les raccordements entre notamment les éléments de capteur enterrés dans le sol et les éléments thermodynamique situés à l'intérieur d'une enceinte (propulseur, condenseur....) ne sont pas visibles et ne sont pas soumis à tout type d'agression extérieure, tels que intempéries, chocs.........

Pour résoudre un tel problème, il a été conçu et mis au point, une pompe à chaleur ayant les caractéristiques de la revendication 1.

Pour résoudre le problème posé de permettre la pénétration des éléments du capteur par le dessous de la structure de l'enceinte, les agencements de passage sont constitués par au moins une ouverture formée dans l'épaisseur du socle.

Avantageusement, l'ouverture est disposée au niveau du condenseur.

On bien dans une autre forme de réalisation, les agencement de passage sont constitués par au moins un espace formé entre la partie intérieure du capot et le socle.

Selon une caractéristique la base de l'invention soit le socle support est rendu solidaire, dans un plan horizontal, d'éléments de surélévation disposés au sol, ou d'une console murale.

Un autre problème que se propose de résoudre l'invention est de diminuer la quantité de fluide frigorigène, sans pour autant diminuer le rendement énergétique. Dans ce but, le capteur constitue des couronnes réalisées au moyen de tubes de diamètre extérieur compris entre 4 et 8 mm environ et, d'une manière préférée, de diamètre extérieur de 6,35mm. La longueur des couronnes est comprise entre 30 et 45 m environ.

Un autre problème que se propose de résoudre l'invention est de réduire les pertes de charge en fluide frigorigène. Dans ce but, le volume des tubes du capteur est réduit par l'introduction dans lesdits tubes d'un fil fixé au niveau d'un distributeur assujetti au condenseur.

L'invention est exposée ci-après plus en détail à l'aide des figures des dessins annexés dans lesquels :

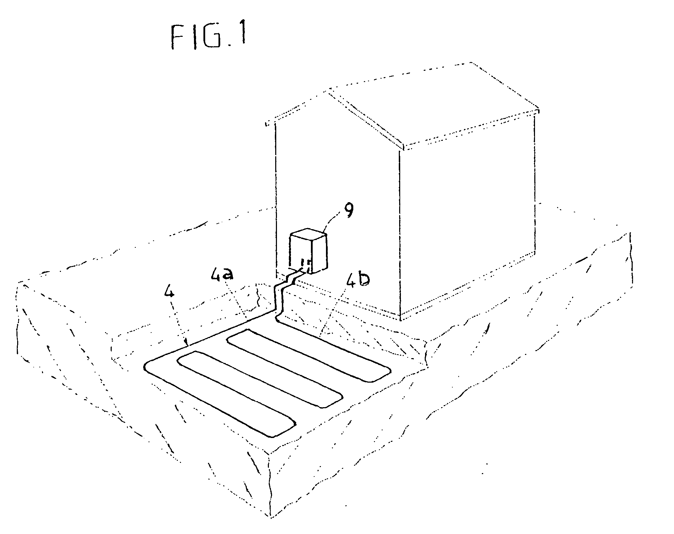

- La figure 1 est une vue en perspective montrant le principe d'un exemple de réalisation d'installations géothermiques.
- La figure 2 est une vue à caractère schématique d'un exemple de réalisation d'une pompe à chaleur montrant le principe de raccordement, selon l'invention avec les éléments enterrés.
- La figure 3 est une vue en coupe transversale considéré selon la ligne 3-3 de la figure 2.
- La figure 4 montre le socle support monté sur une console murale.
- La figure 5 montre le socle support monté sur des éléments de surélévation disposés au niveau du terrassement.

D'une manière connue, l'ensemble de la pompe à chaleur ou générateur, comprend un condenseur (1) et un compresseur (2) monté en combinaison avec des accessoires et des tuyauteries frigorifiques. Par exemple, le fluide frigorigène condensé dans le condenseur (1), est soumis à l'action d'un détendeur (3) pour être réparti dans les différents éléments capteurs (4) enterrés dans le sol en combinaison avec un distributeur (5). Les éléments de capteurs (4) sont par ailleurs assujettis à un collecteur (6), pour permettre au fluide frigorigène de retourner au compresseur (2).

Avantageusement, le raccordement du capteur (4) au compresseur (2) et au condenseur (1) s'effectue par l'intermédiaire de raccords (12) du type obturable ou opercutable. Les raccords (12) sont disposés, pour le condenseur, entre le détendeur (3) et le distributeur (5), et pour le compresseur, à la sortie du collecteur (6).

Les différents organes et éléments (1) (2) (3) (5) sont montés sur une embase constituée par un socle support surélevé (7).

Selon une autre caractéristique à la base de l'invention, le raccordement du capteur (4) au niveau de ses différentes entrées (4a) et de ses différentes sorties (4b), respectivement avec le distributeur (5) et avec le collecteur (6), s'effectue par le dessous du socle (7). Il en est de même en ce qui concerne une tuyauterie ou autre de départ (8a) et d'arrivée (8d) du chauffage par exemple.

Dans ce but le socle (7) présente au moins une ouverture (7a) pour le passage des différents éléments de tuyauterie (4a) (4b) (8a) (8b). Cette ouverture (7a) est par exemple formée dans l'épaisseur du socle (7) au niveau du condenseur (1). L'ensemble du socle (7) avec les éléments (1), (2), (3) et (5) est coiffé par une structure fermée ou enceinte faisant office de capot de protection (9). D'une manière avantageuse, qui ne saurait toutefois pas être considérée comme limitative, le capot (9) est réalisé en matière plastique notamment par thermoformage ou injection.

A noter que les agencements de passage, par le dessous, des éléments (4a) (4b) (8a) (8b), peuvent être constitués par un espace formé entre la partie inférieure du capot et le socle.

Quelle que soit la forme de réalisation, il apparaît que les différents éléments sont engagés par le dessous du socle pour être raccordés en partie basse sur l'enceinte de sorte qu'aucun élément n'est apparent, permettant avantageusement de proposer une installation hors sol de l'ensemble de la pompe à chaleur.

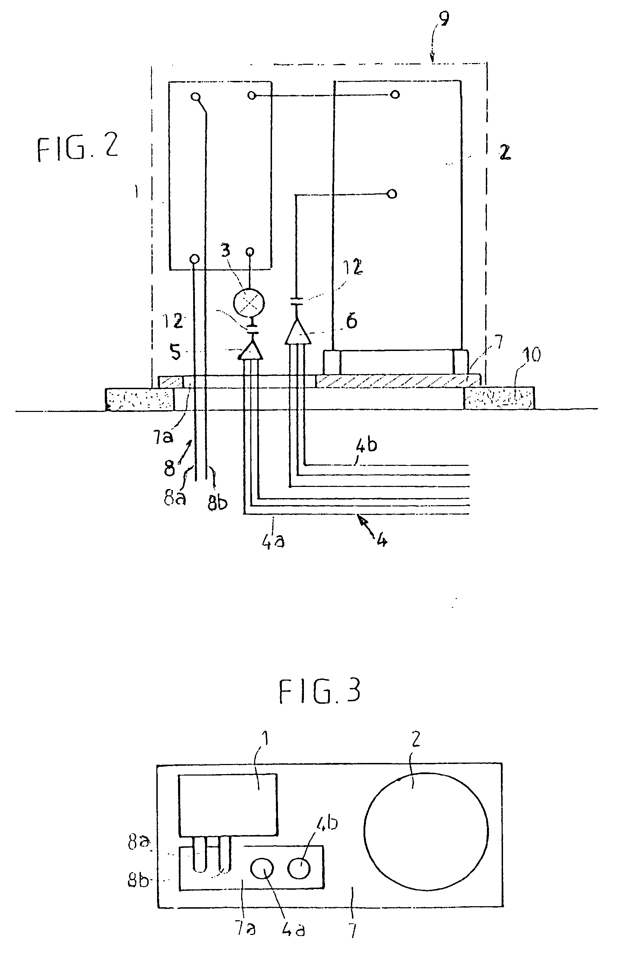

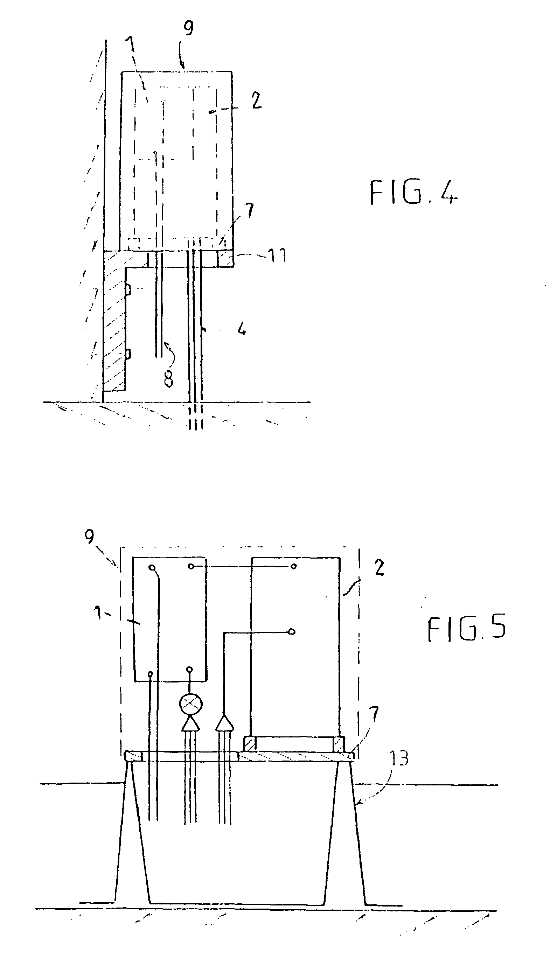

Le socle support (7) est rendu solidaire, dans un plan horizontal, d'éléments (10) de surélévation disposé au sol (figure 2) ou bien comme le montre la figure 4, le socle support (7) est rendu solidaire, dans un plan horizontal, d'une console murale (11).

Dans une autre forme de réalisation (figure 5), le socle support (7) coopère avec des éléments de piètement support (13) montés directement au fond du terrassement ou sur une surélévation formée au fond du terrassement, afin de réduire la hauteur desdits éléments (13). Le socle (7) peut être fixé aux éléments (13) au moment de la fabrication ou lors de la pose. L'élément de piètement (13) est ouvert sur au moins un côté pour permettre le passage des éléments de tuyauterie (4a), (4b), (8a), (8b). Le piètement peut être réalisé en plastique, par exemple par thermoformage, ou en métal. Ce piètement peut également faire office de palette pour la manutention et le transport de l'ensemble.

Avantageusement, le capteur (4) est constitué d'une série de plusieurs tubes disposés à plat ou en couronne et enterrés au sol selon une profondeur comprise entre 40, et 60 centimètres par exemple. Les tubes peuvent être en cuivre et recouverts de matière isolante.

Selon une autre caractéristique de l'invention, les différents tubes constituant l'ensemble du capteur (4), ont un diamètre extérieur compris entre 4 et 8 millimètres.

Avantageusement, ce diamètre est de 6,35 millimètres. La longueur des nappes peut être d'environ 30 à 45 mètres.

Pour réduire la charge en fluide frigorigène, le volume du capteur (4) peut être réduit en introduisant, dans un ou plusieurs des tubes (4a), un fil d'une longueur de plusieurs mètres. Ce fil peut être en cuivre ou en laiton, ou en toute autre matière non corrosive par les fluides frigorigènes. Ce fil est fixé au niveau du distributeur (5) par tout moyen, tel que par brasage ou par un dispositif mécanique.

Les avantages ressortent bien de la description.

## Revendications

1. Pompe à chaleur comprenant un compresseur (2), un condenseur (1), des moyens de liaison frigorifique, et des éléments capteurs (4) exterieurs enterrés dans le sol, **caractérisée en ce que** le compresseur (2) et le condenseur (1) sont disposés sur une embase extérieure constituée par un socle support surélevé (7) présentant des agencements pour le passage et le raccordement, par le dessous, d'une part, des éléments capteurs (4) au compresseur (2) et au condenseur (1) et, d'autre part, d'éléments de liaison (8a) - (8b) avec des moyens de chauffage (8), ledit socle (7) étant coiffé par une structure fermée faisant office de capot de protection (9).

2. Pompe à chaleur selon la revendication 1, **caractérisée en ce que** les agencements de passage sont constitués par au moins une ouverture (7a) formée dans l'épaisseur du socle (7).

3. Pompe à chaleur selon la revendication 1, **caractérisée en ce que** les agencement de passage sont constitués par au moins un espace formé entre la partie inférieure du capot (9) et le socle (7).

4. Pompe à chaleur selon la revendication 2, **caractérisée en ce que** l'ouverture (7a) est disposée au niveau du condenseur.

5. Pompe à chaleur selon la revendication 1, **caractérisée en ce que** le socle support (7) est rendu solidaire, dans un plan horizontal, soit d'éléments de surélévation disposés au sol (10), ou au niveau du terrassement (13), soit d'une console murale (11)

6. Pompe à chaleur selon la revendication 1, **caractérisée en ce que** le raccordement du capteur (4) au compresseur et au condenseur s'effectue par l'intermédiaire de raccords (12) du type obturable ou opercutable.

7. Pompe à chaleur selon la revendication 1, **caractérisée en ce que** les éléments capteurs sont réalisés au moyen de couronnes en tubes de diamètre extérieur compris entre 4 et 8 mm environ et, d'une manière préférée, de diamètre extérieur de 6,35mm.

8. Pompe à chaleur selon la revendication 7, **caractérisée en ce que** la longueur des couronnes est comprise entre 30 et 45 m environ.

9. Pompe à chaleur selon la revendication 7, **caractérisée en ce que** le volume des tubes des éléments capteurs (4) est réduit par l'introduction, dans lesdits tubes, d'un fil fixé au niveau d'un distributeur (5) assujetti au condenseur.

## Claims

1. Heat pump comprising a compressor (2), a condenser (1), refrigeration connecting means, and external sensor elements (4) buried in the ground, **characterized in that** the compressor (2) and the condenser (1) are placed on an external base consisting of a raised support foundation (7) having arrangements for the passage and the connection, from below, on the one hand, of the sensor elements (4) to the compressor (2) and to the condenser (1) and, on the other, of connecting elements (8a) - (8b) with heating means (8), the said foundation (7) being capped by a closed structure serving as a protective cover (9).

2. Heat pump according to Claim 1, **characterized in that** the passage arrangements consist of at least one opening (7a) formed in the thickness of the foundation (7).

3. Heat pump according to Claim 1, **characterized in that** the passage arrangements consist of at least one space formed between the underside of the cover (9) and the foundation (7).

4. Heat pump according to Claim 2, **characterized in that** the opening (7a) is placed at the level of the condenser.

5. Heat pump according to Claim 1, **characterized in that** the support foundation (7) is joined, in a horizontal plane, either to raise elements placed on the ground (10), or in the earthworks (13), or on a wall bracket (11).

6. Heat pump according to Claim 1, **characterized in that** the connection of the sensor (4) to the compressor and to the condenser is provided via couplings (12) of the shutter or covered type.

7. Heat pump according to Claim 1, **characterized in that** the sensor elements are prepared using tube coils having an outside diameter between 4 and about 8 mm and, preferably, having an outside diameter of 6.35 mm.

8. Heat pump according to Claim 7, **characterized in that** the length of the coils is between 30 and about 45 m.

9. Heat pump according to Claim 7, **characterized in that** the volume of the tubes of the sensor elements (4) is reduced by the introduction, into the said tubes, of a wire fixed to a distributor (5) subjected to the condenser.

## Patentansprüche

1. Wärmepumpe mit einem Kompressor (2), einem Kondensator (1), Verbindungselementen zur Kühlung und unterirdisch verlegten Außensensoren (4), **dadurch gekennzeichnet, dass** der Kompressor (2) und der Kondensator (1) auf einer externen Fußfläche, die aus einem erhöhten Sockel (7) besteht, der als Unterlage dient, angeordnet sind, der Anordnungen für den Durchgang und den Anschluss der Sensorelemente (4) zu dem Kompressor (2) und zu dem Kondensator (1) von unten einerseits und von Verbindungselementen (8a) - (8b) an Heizelemente (8) andererseits aufweist, wobei der Sockel (7) durch eine geschlossene Konstruktion bedeckt wird, die als Schutzhaube (9) dient.

2. Wärmepumpe nach Anspruch 1, **dadurch gekennzeichnet, dass** die Durchgangsanordnungen aus mindestens einer Öffnung (7a) bestehen, die in dem Sockel (7) gebildet wird.

3. Wärmepumpe nach Anspruch 1, **dadurch gekennzeichnet, dass** die Durchgangsanordnungen aus mindestens einem Zwischenraum bestehen, der zwischen dem unteren Teil der Schutzhaube (9) und dem Sockel (7) gebildet wird.

4. Wärmepumpe nach Anspruch 2, **dadurch gekennzeichnet, dass** die Öffnung (7a) im Bereich des Kondensators angeordnet ist.

5. Wärmepumpe nach Anspruch 1, **dadurch gekennzeichnet, dass** der Sockel (7), der als Unterlage dient, in einer horizontalen Ebene entweder mit Überhöhungselementen (10), die am Boden oder im Bereich der Erdaufschüttung (13) angeordnet sind, oder mit einer Wandkonsole (11) verbunden ist.

6. Wärmepumpe nach Anspruch 1, **dadurch gekennzeichnet, dass** der Anschluss des Sensors (4) an den Kompressor und an den Kondensator mittels verschließbarer Verbindungen (12)erfolgt.

7. Wärmepumpe nach Anspruch 1, **dadurch gekennzeichnet, dass** die Sensoren mittels Rohrschlangen mit einem Außendurchmesser zwischen ungefähr 4 und 8 mm und vorzugsweise mit einem Außendurchmesser von 6,35 mm hergestellt sind.

8. Wärmepumpe nach Anspruch 7, **dadurch gekennzeichnet, dass** die Länge der Rohrschlangen zwischen ungefähr 30 und 45 m liegt.

9. Wärmepumpe nach Anspruch 7, **dadurch gekennzeichnet, dass** das Rohrvolumen der Sensorelemente (4) durch die Einführung eines Drahtes in die Rohre reduziert wird, wobei diese Einführung im Bereich eines Verteilers (5) erfolgt, der mit dem Kondensator verbunden ist.
